(19) Europäisches Patentamt
European Patent Office
Office européen des brevets

(11) **EP 4 075 338 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **21168181.2**

(22) Anmeldetag: **13.04.2021**

(51) Internationale Patentklassifikation (IPC):
**G06N 3/04** (2023.01) **G06N 3/08** (2023.01)
**G06N 3/084** (2023.01) **G06N 3/044** (2023.01)
**G06N 3/045** (2023.01)

(52) Gemeinsame Patentklassifikation (CPC):
**G06N 3/084; G06N 3/044; G06N 3/045**

(54) **SCHNELLER UND ENERGIESPARENDER ITERATIVER BETRIEB KÜNSTLICHER NEURONALER NETZWERKE**

FAST AND ENERGY-SAVING ITERATIVE OPERATION OF ARTIFICIAL NEURAL NETWORKS

FONCTIONNEMENT ITÉRATIF PLUS RAPIDE ET ÉCONOME EN ÉNERGIE DES RÉSEAUX DE NEURONES ARTIFICIELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.10.2022 Patentblatt 2022/42**

(73) Patentinhaber: **Robert Bosch GmbH**
**70442 Stuttgart (DE)**

(72) Erfinder:
• **Pfeil, Thomas**
**71272 Renningen (DE)**
• **Elsken, Thomas**
**71069 Sindelfingen (DE)**

(56) Entgegenhaltungen:
• **HEMMAT MAEDEH ET AL: "Dynamic Reconfiguration of CNNs for Input-Dependent Approximation", 20TH INTERNATIONAL SYMPOSIUM ON QUALITY ELECTRONIC DESIGN (ISQED), IEEE, 6 March 2019 (2019-03-06), pages 176 - 182, XP033539850, DOI: 10.1109/ISQED.2019.8697843**
• **PFEIL THOMAS: "ItNet: iterative neural networks with small graphs for accurate and efficient anytime prediction", 12 March 2021 (2021-03-12), pages 1 - 10, XP055849109, Retrieved from the Internet <URL:https://arxiv.org/pdf/ 2101.08685v2.pdf> [retrieved on 20211007]**

**Beschreibung**

Die vorliegende Erfindung betrifft den Betrieb künstlicher neuronaler Netzwerke, insbesondere unter der Randbedingung begrenzter Hardware- und Energieressourcen an Bord von Fahrzeugen.

Stand der Technik

Das Führen eines Fahrzeugs im Straßenverkehr durch einen menschlichen Fahrer wird in der Regel trainiert, indem ein Fahrschüler im Rahmen seiner Ausbildung immer wieder mit einem bestimmten Kanon an Situationen konfrontiert wird. Der Fahrschüler muss auf diese Situationen jeweils reagieren und bekommt durch Kommentare oder gar ein Eingreifen des Fahrlehrers eine Rückmeldung, ob seine Reaktion richtig oder falsch war. Dieses Training mit einer endlichen Anzahl von Situationen soll den Fahrschüler dazu befähigen, beim eigenständigen Führen des Fahrzeugs auch unbekannte Situationen zu meistern.

Um Fahrzeuge ganz oder teilweise automatisiert am Straßenverkehr teilnehmen zu lassen, wird angestrebt, diese mit in ganz ähnlicher Weise trainierbaren neuronalen Netzwerken zu steuern. Diese Netzwerke erhalten beispielsweise Sensordaten aus dem Fahrzeugumfeld als Eingaben und liefern als Ausgaben Ansteuersignale, mit denen in den Betrieb des Fahrzeugs eingegriffen wird, und/oder Vorprodukte, aus denen derartige Ansteuersignale gebildet werden. Beispielsweise kann eine Klassifikation von Objekten im Umfeld des Fahrzeugs, und/oder eine semantische Segmentierung des Umfelds des Fahrzeugs, ein derartiges Vorprodukt sein.

(M. Hemmat et al. "Dynamic Reconfiguration of CNNs for Input-Dependent Approximation", 20th International Symposium on Quality Electronic Design (ISQED), IEEE, 6. März 2019, 176-182, doi: 10.1109/ISQED.2019.8697843) und (T. Pfeil, "ItNet: iterative neural networks with small graphs for accurate and efficient anytime prediction", arXiv: 2101.08685v2) offenbaren jeweils Verfahren, bei denen ein Teil eines neuronalen Netzwerks als iterativer Block wiederholt ausgeführt wird. Dabei werden die Parameter, die das Verfahren der Schichten in dem iterativen Block charakterisieren, von Iteration zu Iteration nach einer vorgegebenen Vorschrift geändert.

Zusammenfassung der Erfindung

Die Erfindung wird durch den Gegenstand der Patentansprüche definiert. Beispiele und Ausführungsformen, die nicht unter die Ansprüche fallen, werden präsentiert, um die beanspruchte Erfindung zu definieren und ihr Verständnis zu erleichtern.

Offenbarung der Erfindung

Im Rahmen der Erfindung wurde ein Verfahren zum Betreiben eines künstlichen neuronalen Netzwerks, KNN, entwickelt. Das KNN verarbeitet Eingaben in einer Abfolge von Schichten zu Ausgaben. Diese Schichten können beispielsweise Faltungsschichten, Pooling-Schichten oder vollvernetzte Schichten umfassen.

Die Eingaben des KNN können insbesondere beispielsweise Messdaten umfassen, die mit einem oder mehreren Sensoren aufgenommen wurden. Die Ausgaben des KNN können beispielsweise einen oder mehrere Klassifikations-Scores umfassen, mit denen die Zuordnung der Messdaten zu einer oder mehreren Klassen einer vorgegebenen Klassifikation ausgedrückt wird.

Innerhalb des KNN wird mindestens ein iterativer Block aus einer oder mehreren Schichten festgelegt. Im Zuge der Verarbeitung von einem konkreten Satz Eingaben zu einem konkreten Satz Ausgaben ist dieser iterative Block mehrfach auszuführen.

Zu diesem Zweck wird eine Anzahl J von Iterationen festgelegt, für die der iterative Block höchstens ausgeführt werden soll. Es wird nun eine Eingabe des iterativen Blocks von dem iterativen Block auf eine Ausgabe abgebildet. Diese Ausgabe wird dem iterativen Block erneut als Eingabe zugeführt und vom dem iterativen Block wiederum auf eine neue Ausgabe abgebildet. Nachdem die Iterationen des iterativen Blocks abgeschlossen sind, wird die vom iterativen Block gelieferte Ausgabe der auf den iterativen Block folgenden Schicht des KNN als Eingabe zugeführt. Wenn auf den iterativen Block keine Schicht des KNN mehr folgt, wird diese Ausgabe hingegen als Ausgabe des KNN bereitgestellt.

Die Anzahl J der höchstens auszuführenden Iterationen kann beispielsweise anhand der verfügbaren Hardwareressourcen und/oder Rechenzeit festgelegt werden. Das Iterieren kann aber auch vorzeitig beendet werden, wenn ein vorgegebenes Abbruchkriterium erfüllt ist. Beispielsweise kann das Iterieren beendet werden, wenn die Ausgabe des iterativen Blocks hinreichend gut gegen ein Endergebnis konvergiert ist.

Indem der iterative Block mehrfach ausgeführt wird, wird im Zuge der Verarbeitung einer konkreten Eingabe des KNN zu einer konkreten Ausgabe des KNN die Hardware, auf der der iterative Block implementiert ist, mehrfach durchlaufen. Daher kann eine vorgegebene Verarbeitungsaufgabe mit weniger Hardwareressourcen ausgeführt werden als wenn die Hardware nur ein einziges Mal in einer Richtung von den Daten durchlaufen würde. Die Hardware kann also insgesamt kleiner gebaut sein, was speziell bei Steuergeräten für Fahrzeuge von Vorteil ist.

Ein oder mehrere Parameter, die das Verhalten der Schichten in dem iterativen Block charakterisieren, werden beim Wechsel zwischen den Iterationen, für die der iterative Block ausgeführt wird, verändert. Hierbei werden Parameter, die das Verhalten der Schichten in dem iterativen Block charakterisieren, anhand der Ausgabe eines Hilfs-KNN festgelegt oder moduliert. Dieses Hilfs-KNN erhält

- eine Eingabe des iterativen Blocks, und/oder
- die Parameter, die das Verhalten der Schichten in dem iterativen Block charakterisieren, und/oder
- ein in einer dem iterativen Block nachgeschalteten Schicht des KNN gebildetes Verarbeitungsprodukt, und/oder
- einen fortlaufenden Index der aktuell vom iterativen Block ausgeführten Iteration

als Eingaben.

Hierbei wird unter "modulieren" insbesondere beispielsweise verstanden, dass ein Parameter nicht losgelöst von seiner Vorgeschichte völlig neu festgesetzt, sondern ausgehend von dieser Vorgeschichte und im Einklang hiermit fortentwickelt wird. Beispielsweise kann der Parameter um einen mittleren Wert herum schwanken.

Es wurde erkannt, dass das Hilfs-KNN sehr komplexe Funktionen für die Änderung der Parameter beim Wechsel zwischen den Iterationen in sehr kompakter Form modellieren kann. Diese erweiterte Flexibilität bringt es wiederum mit sich, dass der iterative Block deutlich kleiner, also mit deutlich weniger Neuronen bzw. anderen Verarbeitungseinheiten, ausgeführt werden und dennoch seine Funktion in Bezug auf die vorliegende Anwendung gut erfüllen kann. Ursache hierfür ist, dass der aus den Neuronen bzw. anderen Verarbeitungseinheiten des iterativen Blocks gebildete Graph, den die in das KNN eingegebenen Daten durchlaufen müssen, dank der flexibleren Anpassung der Parameter deutlich kleiner sein kann.

Dies wiederum erleichtert es, bei der Ausführung des iterativen Blocks auf einer Recheneinheit, etwa einer CPU oder einem FPGA, mit dem jeweiligen internen Speicher dieser Recheneinheit auszukommen, ohne auf einen externen Arbeitsspeicher (etwa DDR-RAM) zurückgreifen zu müssen. Prozessorinterne Speicher, wie etwa Cache-Speicher und erst recht Register, sind um Größenordnungen schneller zugreifbar als etwa DDR-RAM, können dafür aber um Größenordnungen weniger Daten beherbergen. Gleichzeitig ist der Zugriff auf die prozessorinternen Speicher deutlich energieeffizienter, weil keine Signale über externe Leitungen kommuniziert werden müssen.

Weiterhin ist das Verändern der Parameter anhand der Ausgabe des Hilfs-KNN dahingehend besonders vorteilhaft, dass ein solches Hilfs-KNN besonders gut verschiedene Eingaben von Daten ganz unterschiedlicher Typen sinnvoll zu einer Ausgabe kombinieren kann. Beispielsweise kann ein in einer dem iterativen Block nachgeschalteten Schicht des KNN gebildetes Verarbeitungsprodukt mit der Eingabe des iterativen Blocks kombiniert werden. Das Verarbeitungsprodukt kann beispielsweise die Ausgabe des KNN insgesamt sein. Bei einem als Bildklassifikator verwendeten KNN kann diese Ausgabe etwa ein Vektor von Klassifikations-Scores in Bezug auf verschiedene Klassen sein. Die Eingabe des iterativen Blocks kann dann hingegen beispielsweise eine oder mehrere von Faltungsschichten gebildete Merkmalskarten umfassen, die durch Anwendung von Filterkernen erzeugt wurden.

Das Abarbeiten des Hilfs-KNN verursacht einen Zusatzaufwand. Dieses Hilfs-KNN ist jedoch typischerweise deutlich kleiner als der iterative Block. Somit überwiegen letztendlich die Einsparungen durch die mögliche Verkleinerung des iterativen Blocks.

In einer besonders vorteilhaften Ausgestaltung werden neue Werte der Parameter des iterativen Blocks, und/oder Aktualisierungen für diese Parameter, anhand einer differenzierbaren Funktion der Ausgabe des Hilfs-KNN festgelegt. Dies erleichtert es, das Hilfs-KNN gemeinsam mit dem eigentlichen KNN auf das gemeinsame durch die jeweilige Anwendung vorgegebene Endziel zu trainieren. Ausgehend von einer Bewertung der letztendlichen Ausgabe des KNN mit einer Kostenfunktion (Loss-Funktion) können dann Gradienten der Parameter des iterativen Blocks nahtlos in das Hilfs-KNN zurückpropagiert werden. Sofern der Übergang aus dem Hilfs-KNN in die Parameter des iterativen Blocks nicht differenzierbar ist, wird für diese Rückpropagation eine differenzierbare Approximation benötigt.

In einer weiteren besonders vorteilhaften Ausgestaltung wird mindestens ein Parameter des iterativen Blocks durch Ausführen eines Maschinenbefehls moduliert, der auf der hierfür verwendeten Hardwareplattform schneller ausführbar ist als das Setzen dieses Parameters auf einen beliebigen Wert. Beispiele für solche Operationen sind das Inkrementieren und Dekrementieren sowie die bitweise Verschiebung, die eine Multiplikation oder Division um eine Zweierpotenz bewirkt. Auf diese Weise wird das Anpassen der Parameter des iterativen Blocks zwischen den Iterationen beschleunigt.

In einer weiteren besonders vorteilhaften Ausgestaltung wird lediglich ein Teil der Parameter, die das Verhalten der Schichten in dem iterativen Block charakterisieren, beim Wechsel zwischen den Iterationen, für die der iterative Block ausgeführt wird, verändert. Weder werden alle Parameter verändert, noch werden alle Parameter festgehalten. Die durch das Verändern der Parameter im iterativen Block bewirkte Flexibilität ist nicht "kostenlos" zu haben, sondern erfordert immer auch etwas Zeit und Energie.

Es wurde erkannt, dass ausgehend von dem Zustand, in dem alle Parameter festgehalten werden, das Verändern einiger weniger Parameter einen Gewinn an Flexibilität bringt, der die notwendige Größe des KNN deutlich verkleinert und zugleich etwa bei Klassifikatoren die Klassifikationsgenauigkeit deutlich verbessert. Demgegenüber fällt ein Mehrbedarf an Energie und/oder Zeit für das Verändern dieser wenigen Parameter zwischen den Iterationen noch nicht ins Gewicht. In erster Näherung bewirkt der Zugewinn an Flexibilität also pro zusätzlich verändertem Parameter ein gewisses Quantum an vorteilhaftem Effekt, das für die ersten veränderten Parameter besonders groß ist und dann relativ schnell abfällt, bis es in eine Sättigung geht. Der Preis in Energie und/oder Geschwindigkeit, der pro zusätzlich verändertem Parameter zu zahlen ist, ist hingegen in erster Näherung konstant. Daher ist bei einer bestimmten Anzahl veränderter Parameter ein "Break-Even" erreicht, ab dem das Verändern von noch mehr Parametern eher nachteilig als vorteilhaft ist.

Daher werden in einer besonders vorteilhaften Ausgestaltung ausgehend von mindestens einer Iteration ein Anteil von zwischen 1 % und 20 %, bevorzugt zwischen 1 % und 15 %, der Parameter, die das Verhalten der Schichten in dem iterativen Block charakterisieren, beim Wechsel zur nächsten Iteration verändert.

In einer weiteren vorteilhaften Ausgestaltung wird bei einem ersten Wechsel zwischen Iterationen ein erster Teil der Parameter und bei einem zweiten Wechsel zwischen Iterationen ein zweiter Teil der Parameter verändert. Dabei ist der zweite Teil nicht deckungsgleich mit dem ersten Teil. Die beiden Teile können aber jeweils die gleiche Anzahl Parameter umfassen. Auf diese Weise kann der iterativ ausgeführte Block noch mehr Flexibilität hinzugewinnen, ohne dass dies mit noch mehr Aufwand an Zeit oder Energie erkauft werden müsste.

In einer weiteren besonders vorteilhaften Ausgestaltung wird ein KNN gewählt, das Eingaben zunächst mit mehreren Faltungsschichten verarbeitet und aus dem hierbei erhaltenen Ergebnis mit mindestens einer weiteren Schicht mindestens einen Klassifikations-Score in Bezug auf eine vorgegebene Klassifikation ermittelt. Der iterative Block wird dann so festgelegt, dass er mindestens einen Teil der Faltungsschichten umfasst. Hiermit kann im Vergleich zur Realisierung eines KNN, das lediglich einmal und nur in einer Richtung durchlaufen wird, besonders viel Hardware eingespart werden. Dabei ist es besonders vorteilhaft, wenn die erste Faltungsschicht, der die Eingaben des KNN zugeführt werden, noch nicht Teil des iterativen Blocks ist. In dieser Faltungsschicht besteht dann noch die maximale Flexibilität, um die Dimensionalität der Eingabe in sinnvoller Weise zu reduzieren. Die hierfür erforderliche Zahl von Rechenoperationen ist dann noch nicht durch die iterative Ausführung erhöht. In den weiteren, iterativ ausgeführten Faltungsschichten können anschließend sukzessive Merkmale aus den Eingaben extrahiert werden, bevor aus diesen Merkmalen dann, beispielsweise mit einer vollvernetzten Schicht, der Klassifikationsscore ermittelt wird.

Die Eingaben können insbesondere beispielsweise Bilddaten und/oder Zeitreihendaten sein. Gerade diese Datentypen sind besonders hochdimensional, so dass die Verarbeitung mit iterativ ausgeführten Faltungsschichten besonders vorteilhaft ist.

Wie zuvor erläutert, kann zumindest der iterative Block des KNN auf mindestens einer Recheneinheit unter Verwendung von Maschinenbefehlen ausgeführt werden, die ausschließlich auf einen internen Speicher dieser Recheneinheit zugreifen. Diese Recheneinheit kann insbesondere beispielsweise eine CPU oder ein FPGA sein. Es kann dann insbesondere beispielsweise ein Registerspeicher, und/oder ein Cache-Speicher, als interner Speicher gewählt werden.

Ein bestehendes, fertig trainiertes KNN kann ohne neues Training "lift-and-shift" so implementiert werden, dass es mit dem hier beschriebenen Verfahren betrieben werden kann. Noch bessere Ergebnisse liefert das KNN jedoch, wenn es sich bereits beim Training darauf einstellen kann, dass es mit diesem Verfahren betrieben werden wird. Die Erfindung bezieht sich daher auch auf ein Verfahren zum Trainieren eines KNN für den Betrieb nach dem zuvor beschriebenen Verfahren.

Bei diesem Verfahren werden Lern-Eingaben sowie zugehörige Lern-Ausgaben, auf die das KNN die Lern-Eingaben jeweils abbilden soll, bereitgestellt. die Lern-Eingaben werden von dem KNN auf Ausgaben abgebildet. Die Abweichung der Ausgaben von den Lern-Ausgaben wird mit einer vorgegebenen Kostenfunktion bewertet.

Die Parameter, die das Verhalten der Schichten im iterativen Block charakterisieren, einschließlich ihrer Änderungen beim Wechsel zwischen den Iterationen, und/oder Parameter, die das Verhalten des Hilfs-KNN charakterisieren, werden dahingehend optimiert, dass sich bei weiterer Verarbeitung von Lern-Eingaben durch das KNN die Bewertung durch die Kostenfunktion voraussichtlich verbessert.

Hierbei ist es in gewissen Grenzen wählbar, inwieweit die Festlegung der Parameter des iterativen Blocks durch das Hilfs-KNN erfolgt und inwieweit Parameter des iterativen Blocks auch noch unabhängig vom Hilfs-KNN geändert werden können. Wenn die Parameter des iterativen Blocks vollständig durch das Hilfs-KNN festgelegt werden, müssen nur die Parameter des Hilfs-KNN optimiert werden. Wenn die Parameter des iterativen Blocks auch noch unabhängig vom Hilfs-KNN geändert werden können, sollte sich die Optimierung auch auf diese möglichen unabhängigen Änderungen erstrecken.

Auf diese Weise kann insbesondere beispielsweise eine vorgegebene Zahl von Parametern, die beim Wechsel zwischen den Iterationen geändert werden soll, so ausgenutzt werden, dass mit der hierdurch gewonnenen Flexibilität eine möglichst gute Leistung des KNN im Hinblick auf die trainierte Aufgabe erzielt wird.

Es kann aber auch beispielsweise ein zusätzlicher Gegenstand der Optimierung sein, welche und/oder wie viele Parameter, die das Verhalten der Schichten im iterativen Block charakterisieren, überhaupt beim Wechsel zwischen Iterationen verändert werden sollen. Zu diesem Zweck kann beispielsweise die Kostenfunktion einen Beitrag enthalten, der von der Anzahl der beim Wechsel zwischen Iterationen geänderten Parameter, von der Änderungsrate dieser geänderten Parameter, und/oder von der absoluten oder relativen Änderung über alle Parameter, abhängt. Auf diese Weise kann beispielsweise der Vorteil, den der Flexibilitätsgewinn durch das zusätzliche Verändern eines Parameters bringt, gegen den Energie- und Zeitaufwand für dieses Ändern abgewogen werden.

Dieser Beitrag kann beispielsweise die Form

$$L = \sum_{j}^{J-1} \sum_{i}^{I} \left\| w_i^j, w_i^{j+1} \right\|$$

haben. Hierin sind $w_i^j$ die Parameter, die das Verhalten der Schichten im iterativen Block charakterisieren. Das Subskript i bezeichnet die einzelnen Parameter, das Superskript j bezeichnet die Iterationen. I bezeichnet die Gesamtzahl der vorhandenen Parameter, und J bezeichnet die Gesamtzahl der Iterationen. L misst also die absolute oder relative Änderung über alle Parameter nach einer beliebigen Norm, etwa einer $L_0$-Norm, einer $L_1$-Norm, einer $L_2$-Norm oder einer $L_\infty$-Norm. Eine $L_0$-Norm misst die Anzahl der Parameter, die sich ändern.

In einer weiteren vorteilhaften Ausgestaltung können gleichzeitig und/oder im Wechsel mit den Parametern, die das Verhalten der Schichten im iterativen Block charakterisieren, auch weitere Parameter, die das Verhalten weiterer Neuronen und/oder anderer Verarbeitungseinheiten des KNN außerhalb des iterativen Blocks charakterisieren, auf eine voraussichtlich bessere Bewertung durch die Kostenfunktion optimiert werden. Dann können beispielsweise die nicht iterativ ausgeführten Teile des KNN Einbußen bei der Genauigkeit, die das im iterativen Block des KNN gebrachte Opfer an Flexibilität mit sich bringt, zumindest teilweise ausgleichen.

Wie zuvor erläutert, ist die iterative Ausführung von Teilen eines KNN besonders an Bord von Fahrzeugen vorteilhaft, wo sowohl zusätzlicher Platz für Hardware als auch Energie aus dem Bordnetz des Fahrzeugs begrenzte Ressourcen sind.

Daher bezieht sich die Erfindung auch auf ein Steuergerät für ein Fahrzeug. Dieses Steuergerät umfasst eine Eingabeschnittstelle, die mit einem oder mehreren Sensoren des Fahrzeugs verbindbar ist, sowie eine Ausgabeschnittstelle, die mit einem oder mehreren Aktoren des Fahrzeugs verbindbar ist. Das Steuergerät umfasst weiterhin ein KNN. Dieses KNN ist an der Verarbeitung von über die Eingabeschnittstelle bezogenen Messdaten von dem oder den Sensoren zu einem Ansteuersignal für die Ausgabeschnittstelle beteiligt. Weiterhin ist dieses KNN für die Durchführung des eingangs beschriebenen Verfahrens hergerichtet. In diesem Umfeld ist die zuvor diskutierte Einsparung sowohl von Hardwareressourcen als auch von Energie besonders vorteilhaft.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:

Figur 1 Ausführungsbeispiel des Verfahrens 100 zum Betreiben des KNN 1;

Figur 2 Beispielhafte Realisierung des Verfahrens 100 an einem Klassifikatornetzwerk;

Figur 3 Ausführungsbeispiel des Verfahrens 200 zum Trainieren des KNN 1;

Figur 4 Ausführungsbeispiel des Steuergeräts 51 für ein Fahrzeug 50;

Figur 5 Veranschaulichung des Vorteils, lediglich einige Parameter des iterativen Blocks zu ändern.

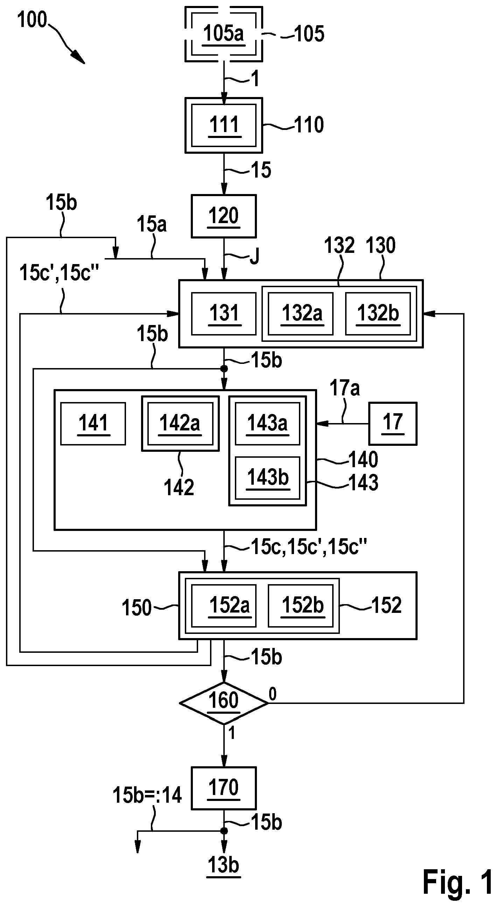

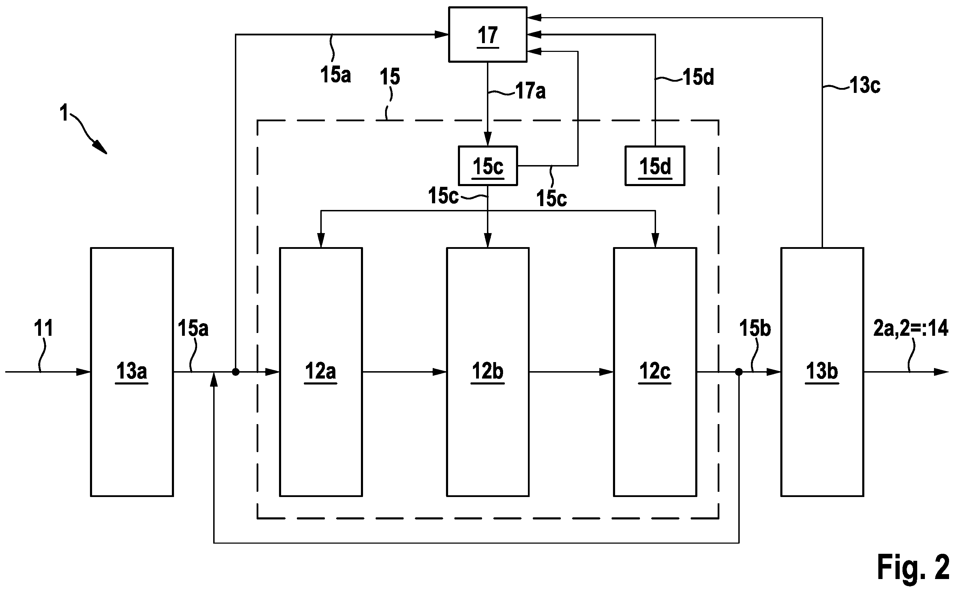

Figur 1 ist ein schematisches Ablaufdiagramm eines Ausführungsbeispiels des Verfahrens 100 zum Betreiben des KNN 1. Das KNN 1 umfasst eine Abfolge von Schichten 12a-12c, 13a-13b, mit denen es Eingaben 11 zu Ausgaben 14 verarbeitet. Diese Schichten sind in Figur 2 näher erläutert.

In Schritt 110 wird innerhalb des KNN 1 mindestens ein iterativer Block 15 aus einer oder mehreren Schichten 12a-12c festgelegt, der mehrfach auszuführen ist. In Schritt 120 wird eine Anzahl J von Iterationen festgelegt, für die dieser iterative Block 15 ausgeführt werden soll.

Entsprechend der Architektur des KNN 1 erhält der iterative Block 15 eine bestimmte Eingabe 15a. Diese Eingabe 15a wird in Schritt 130 von dem iterativen Block 15 auf eine Ausgabe 15b abgebildet. Dabei ist das Verhalten des iterativen Blocks 15 durch Parameter 15c charakterisiert. Diese Parameter 15c können beispielsweise Gewichte sein, mit denen Eingaben, die einem Neuron oder einer anderen Verarbeitungseinheit des KNN 1 zugeführt werden, zu einer Aktivierung dieses Neurons, bzw. dieser anderen Verarbeitungseinheit, verrechnet werden.

In Schritt 140 werden Parameter 15c, die das Verhalten der Schichten 12a-12c in dem iterativen Block 15 charakterisieren, anhand der Ausgabe 17a eines Hilfs-KNN 17 festgelegt oder moduliert. Dabei erhält dieses Hilfs-KNN 17

- eine Eingabe 15a des iterativen Blocks 15, und/oder
- ein in einer dem iterativen Block 15 nachgeschalteten Schicht 13b des KNN 1 gebildetes Verarbeitungsprodukt 13c, und/oder
- die Parameter 15c, die das Verhalten des iterativen Blocks 15 charakterisieren, und/oder
- einen fortlaufenden Index 15d der aktuell vom iterativen Block 15 ausgeführten Iteration

als Eingaben.

Hierbei können insbesondere beispielsweise gemäß Block 141 neue Werte der Parameter 15c, und/oder Aktualisierungen für diese Parameter 15c, anhand einer differenzierbaren Funktion der Ausgabe 17a des Hilfs-KNN 17 festgelegt werden.

Gemäß Block 142 kann insbesondere beispielsweise mindestens ein Parameter 15c durch Ausführen eines Maschinenbefehls moduliert werden, der auf der hierfür verwendeten Hardwareplattform schneller ausführbar ist als das Setzen dieses Parameters 15c auf einen beliebigen Wert. Die mit diesem Maschinenbefehl bewirkte Operation kann gemäß Block 142a insbesondere beispielsweise ein Inkrementieren, ein Dekrementieren oder eine bitweise Verschiebung sein.

Gemäß Block 143 kann beispielsweise lediglich ein Teil 15c' der Parameter 15c verändert werden, bevor der iterative Block 15 in der nächsten Iteration ausgeführt wird. Es bleiben also weder alle Parameter 15c ungeändert, noch werden alle Parameter 15c geändert.

Um die nächste Iteration auszuführen, wird in Schritt 150 die zuvor vom iterativen Block 15 erzeugte Ausgabe 15b dem iterativen Block 15 erneut als Eingabe 15a zugeführt.

In Schritt 160 wird geprüft, ob die Iterationen des iterativen Blocks 15 abgeschlossen wurden. Die Iterationen sind abgeschlossen, wenn bereits J Iterationen durchlaufen wurden oder wenn ein anderes vorgegebenes Abbruchkriterium erfüllt ist, je nachdem, was zuerst eintritt. Wenn die Iterationen noch nicht abgeschlossen sind (Wahrheitswert 0), wird zum Ändern eines Teils 15c' der Parameter in Schritt 140 und anschließenden Durchlaufen einer weiteren Iteration in Schritt 150 zurückverzweigt. Wenn die Iterationen hingegen abgeschlossen sind (Wahrheitswert 1), wird in Schritt 170 die Ausgabe 15b des iterativen Blocks 15 der auf den iterativen Block 15 folgenden Schicht 13b des KNN 1 als Eingabe zugeführt. Wenn es keine solche folgende Schicht 13b mehr gibt, wird die Ausgabe 15b des iterativen Blocks 15 hingegen als Ausgabe 14 des KNN 1 bereitgestellt.

Optional kann in Schritt 105 ein KNN 1 gewählt werden, das Eingaben 11 zunächst mit mehreren Faltungsschichten 13a, 12a-12c verarbeitet und aus dem hierbei erhaltenen Ergebnis mit mindestens einer weiteren Schicht 13b mindestens einen Klassifikations-Score 2a in Bezug auf eine vorgegebene Klassifikation 2 als Ausgabe 15 ermittelt. Gemäß Block 111 kann dann der iterative Block 15 so festgelegt werden, dass er mindestens einen Teil 12a-12c der Faltungsschichten 13a, 12a-12c umfasst. Dies ist in Figur 2 näher dargestellt.

Es können insbesondere beispielsweise gemäß Block 105a Bilddaten und/oder Zeitreihendaten als Eingaben 11 des KNN 1 gewählt werden.

Das Abbilden einer Eingabe 15a des iterativen Blocks 15 auf eine Ausgabe 15b kann gemäß Block 131 insbesondere beispielsweise beinhalten, Eingaben, die Neuronen und/oder andere Verarbeitungseinheiten in dem iterativen Block zugeführt werden, mittels Analogelektronik gewichtet zu summieren (Multiply and Accumulate, MAC).

Gemäß Block 132, bzw. 152, kann insbesondere beispielsweise zumindest der iterative Block 15 des KNN 1 auf mindestens einer Recheneinheit unter Verwendung von Maschinenbefehlen ausgeführt werden, die ausschließlich auf einen internen Speicher dieser Recheneinheit zugreifen. Hierbei kann insbesondere beispielsweise gemäß Block 132a, bzw. 152a, eine CPU oder ein FPGA als Recheneinheit gewählt werden. Gemäß Block 132b, bzw. 152b, kann insbesondere beispielsweise ein Registerspeicher, und/oder ein Cache-Speicher, als interner Speicher gewählt werden.

Gemäß Block 143a kann insbesondere beispielsweise ein Anteil 15c' von zwischen 1 % und 20 %, bevorzugt zwischen 1 % und 15 %, der Parameter 15c, die das Verhalten der Schichten 12a-12c in dem iterativen Block 15 charakterisieren, beim Wechsel zur nächsten Iteration verändert werden.

Gemäß Block 143b kann bei einem ersten Wechsel zwischen Iterationen ein erster Teil 15c' der Parameter 15c und bei einem zweiten Wechsel zwischen Iterationen ein zweiter Teil 15c" der Parameter 15c verändert werden. Dabei ist der zweite Teil 15c" nicht deckungsgleich mit dem ersten Teil 15c'.

Figur 2 zeigt eine beispielhafte Realisierung des Verfahrens an einem Klassifikatornetzwerk als KNN 1. Das KNN 1 nimmt Messdaten als Eingaben 11 entgegen und gibt Klassifikations-Scores 2a für diese Messdaten in Bezug auf eine vorgegebene Klassifikation 2 als Ausgaben 14 aus.

Zu diesem Zweck wird in einer ersten Faltungsschicht 13a die Dimensionalität der Messdaten reduziert, bevor in weiteren Faltungsschichten 12a-12c sukzessive Merkmale in den Messdaten erkannt werden. Dieses weitere Erkennen von Merkmalen kann beispielsweise gleichzeitig oder nacheinander auf verschiedenen Größenskalen erfolgen.

Die weiteren Faltungsschichten 12a-12c werden zum iterativen Block 15 zusammengefasst, der seine Eingabe aus der ersten Faltungsschicht 13a erhält und mehrfach ausgeführt wird. Dabei wird die Ausgabe 15b einer Iteration jeweils als Eingabe 15a der nächsten Iteration verwendet.

Wenn die Iterationen des iterativen Blocks 15 abgeschlossen sind, wird die Ausgabe 15b des iterativen Blocks 15 an die vollvernetzte Schicht 13b weitergegeben, wo die Klassifikations-Scores 2a gebildet werden. Alternativ kann bei jeder Iteration auch ein Klassifikations-Score 2a berechnet werden.

Es ist zusätzlich ein Hilfs-KNN 17 vorgesehen, um Parameter 15c, die das Verhalten der Schichten 12a-12c in dem iterativen Block 15 charakterisieren, anhand der Ausgabe 17a dieses Hilfs-KNN 17 festzulegen oder zu modulieren. In dem in Figur 2 gezeigten Beispiel sind

- eine Eingabe 15a des iterativen Blocks 15, und/oder
- ein in einer dem iterativen Block 15 nachgeschalteten Schicht 13b des KNN 1 gebildetes Verarbeitungsprodukt 13c, und/oder
- die Parameter 15c, die das Verhalten des iterativen Blocks 15 charakterisieren, und/oder
- einen fortlaufenden Index 15d der aktuell vom iterativen Block 15 ausgeführten Iteration

als Eingaben in das Hilfs-KNN 17 geführt.

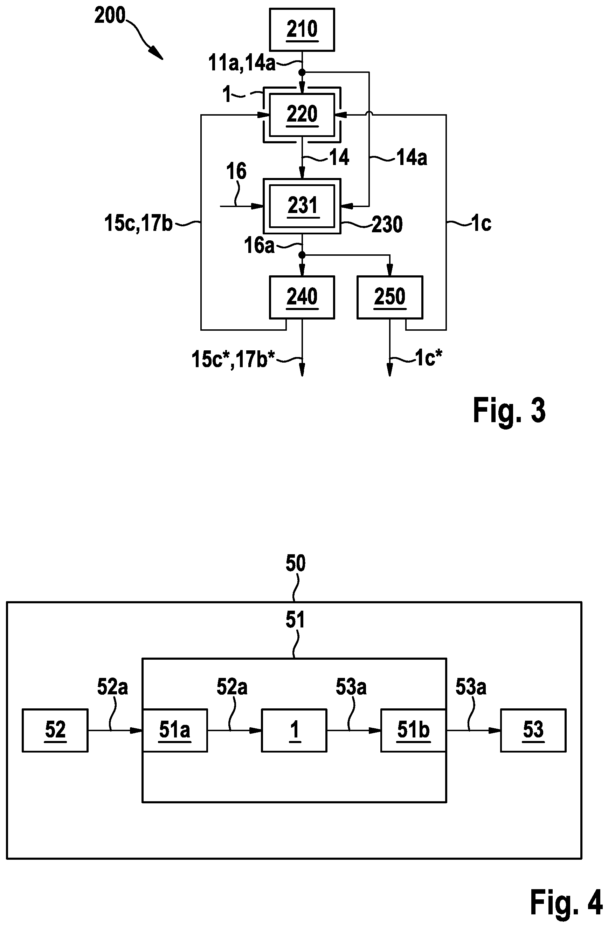

Figur 3 ist ein schematisches Ablaufdiagramm eines Ausführungsbeispiels des Verfahrens 200 zum Trainieren des KNN 1.

In Schritt 210 werden Lern-Eingaben 11a sowie zugehörige Lern-Ausgaben 14a, auf die das KNN 1 die Lern-Eingaben 11a jeweils abbilden soll, bereitgestellt. Diese Lern-Eingaben 11a werden in Schritt 220 von dem KNN 1 auf Ausgaben 14 abgebildet. Die Abweichung der Ausgaben 14 von den Lern-Ausgaben 14a wird in Schritt 230 mit einer vorgegebenen Kostenfunktion 16 bewertet.

In Schritt 240 werden die Parameter 15c, die das Verhalten der Schichten 12a-12c, 13a im iterativen Block 15 charakterisieren, einschließlich ihrer Änderungen beim Wechsel zwischen den Iterationen, und/oder Parameter 17b, die das Verhalten des Hilfs-KNN 17 charakterisieren, dahingehend optimiert, dass sich bei weiterer Verarbeitung von Lern-Eingaben 11a durch das KNN 1 die Bewertung 16a durch die Kostenfunktion 16 voraussichtlich verbessert.

In Schritt 250 werden gleichzeitig oder im Wechsel hierzu weitere Parameter 1c, die das Verhalten weiterer Neuronen und/oder anderer Verarbeitungseinheiten des KNN 1 außerhalb des iterativen Blocks 15 charakterisieren, auf eine voraussichtlich bessere Bewertung 16a durch die Kostenfunktion 16 optimiert.

Der fertig trainierte Zustand der Parameter 15c ist mit dem Bezugszeichen 15c* bezeichnet. Der fertig trainierte Zustand der Parameter 17b ist mit dem Bezugszeichen 17b* bezeichnet. Der fertig trainierte Zustand der Parameter 1c ist mit dem Bezugszeichen 1c* bezeichnet.

Figur 4 zeigt ein Ausführungsbeispiel des Steuergeräts 51 für ein Fahrzeug 50. Das Steuergerät 51 weist eine Eingabeschnittstelle 51a auf, die hier mit einem Sensor 52 des Fahrzeugs 50 verbunden ist und Messdaten 52a von diesem Sensor 52 entgegennimmt. Die Messdaten 52a werden unter Mitwirkung eines KNN 1 zu einem Ansteuersignal 53a verarbeitet, das für einen Aktor 53 des Fahrzeugs 50 bestimmt ist. Das Ansteuersignal 53a wird über eine Ausgabeschnittstelle 51b des Steuergeräts 51, mit der der Aktor 53 verbunden ist, an den Aktor 53 weitergeleitet.

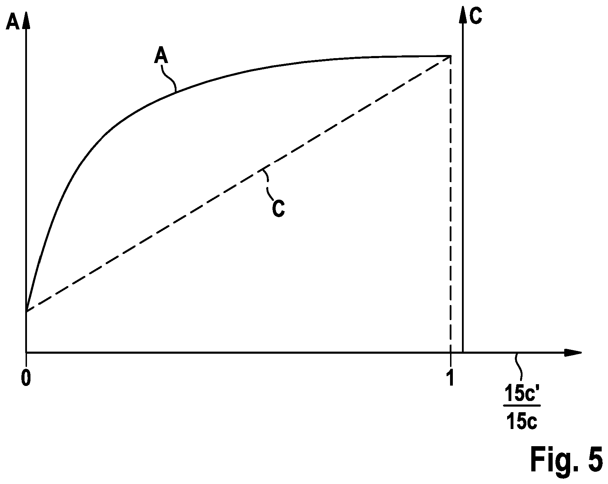

Figur 5 verdeutlich schematisch den Vorteil, den es bringt, beim Wechsel zwischen Iterationen lediglich einen Teil 15c' der Parameter 15c zu ändern, die das Verhalten des iterativen Blocks 15 charakterisieren. Über dem Quotienten 15c'/15c aus der Anzahl der geänderten Parameter 15c' und der Anzahl der insgesamt vorhandenen Parameter 15c sind sowohl die Klassifikationsgenauigkeit A eines als Klassifikatornetzwerk verwendeten KNN 1 als auch die Energiekosten C für den Betrieb dieses KNN 1 aufgetragen.

Gewisse Energiekosten C fallen auch dann an, wenn keine Parameter 15c geändert werden. Ausgehend von diesem Sockelbetrag steigen die Energiekosten C linear mit der Anzahl der geänderten Parameter 15c'. Die Klassifikationsgenauigkeit A steigt jedoch nichtlinear. Sie nimmt bereits stark zu, wenn nur einige wenige Parameter 15c' geändert werden. Dieses Wachstum schwächt sich mit zunehmender Anzahl geänderter Parameter 15c' ab und geht irgendwann in eine Sättigung. Es ist somit vorteilhaft, für einen geringen Preis an zusätzlichen Energiekosten C den anfänglichen großen Anstieg der Klassifikationsgenauigkeit A auszunutzen.

**Patentansprüche**

1.  Computerimplementiertes Verfahren (100) zum Betreiben eines künstlichen neuronalen Netzwerks, KNN (1), welches Eingaben (11) in einer Abfolge von Schichten (12a-12c, 13a-13b) zu Ausgaben (14) verarbeitet, mit den Schritten:

    • innerhalb des KNN (1) wird mindestens ein iterativer Block (15) aus einer oder mehreren Schichten (12a-12c) festgelegt (110), der mehrfach auszuführen ist;
    • es wird eine Anzahl J von Iterationen festgelegt (120), für die dieser iterative Block (15) höchstens ausgeführt werden soll;
    • eine Eingabe (15a) des iterativen Blocks (15) wird von dem iterativen Block (15) auf eine Ausgabe (15b) abgebildet (130);

• diese Ausgabe (15b) wird dem iterativen Block (15) erneut als Eingabe (15a) zugeführt (150) und vom dem iterativen Block (15) wiederum auf eine neue Ausgabe (15b) abgebildet;

• nachdem die Iterationen des iterativen Blocks (15) abgeschlossen sind (160), wird die vom iterativen Block (15) gelieferte Ausgabe (15b) der auf den iterativen Block (15) folgenden Schicht (13b) des KNN (1) als Eingabe zugeführt (170) oder als Ausgabe (14) des KNN (1) bereitgestellt,

• wobei Parameter (15c), die das Verhalten der Schichten (12a-12c) in dem iterativen Block (15) charakterisieren, anhand der Ausgabe (17a) eines Hilfs-KNN (17), das

○ eine Eingabe (15a) des iterativen Blocks (15), oder
○ ein in einer dem iterativen Block (15) nachgeschalteten Schicht (13b) des KNN (1) gebildetes Verarbeitungsprodukt (13c), oder
○ die Parameter (15c), die das Verhalten des iterativen Blocks (15) charakterisieren, oder
○ einen fortlaufenden Index (15d) der aktuell vom iterativen Block (15) ausgeführten Iteration als Eingaben erhält, festgelegt oder moduliert werden (140), und

• wobei zumindest der iterative Block (15) des KNN (1) auf mindestens einer Recheneinheit unter Verwendung von Maschinenbefehlen ausgeführt wird (132, 152), die ausschließlich auf einen internen Speicher dieser Recheneinheit zugreifen.

2. Verfahren (100) nach Anspruch 1, wobei neue Werte der Parameter (15c), und/oder Aktualisierungen für diese Parameter (15c), anhand einer differenzierbaren Funktion der Ausgabe (17a) des Hilfs-KNN (17) festgelegt werden (141).

3. Verfahren (100) nach einem der Ansprüche 1 bis 2, wobei mindestens ein Parameter (15c) durch Ausführen eines Maschinenbefehls moduliert wird (142), der auf der hierfür verwendeten Hardwareplattform schneller ausführbar ist als das Setzen dieses Parameters (15c) auf einen beliebigen Wert.

4. Verfahren (100) nach Anspruch 3, wobei der mindestens eine Parameter (15c) durch Inkrementieren, Dekrementieren oder bitweise Verschiebung moduliert wird (142a).

5. Verfahren (100) nach einem der Ansprüche 1 bis 4, wobei lediglich ein Teil (15c') der Parameter (15c), die das Verhalten der Schichten (12a-12c) in dem iterativen Block (15) charakterisieren, beim Wechsel zwischen den Iterationen, für die der iterative Block (15) ausgeführt wird, verändert wird (143).

6. Verfahren (1) nach Anspruch 5, wobei ausgehend von mindestens einer Iteration ein Anteil (15c') von zwischen 1 % und 20 %, bevorzugt zwischen 1 % und 15 %, der Parameter (15c), die das Verhalten der Schichten (12a-12c) in dem iterativen Block (15) charakterisieren, beim Wechsel zur nächsten Iteration verändert werden (143a).

7. Verfahren (100) nach einem der Ansprüche 5 bis 6, wobei bei einem ersten Wechsel zwischen Iterationen ein erster Teil (15c') der Parameter (15c) und bei einem zweiten Wechsel zwischen Iterationen ein zweiter Teil (15c") der Parameter (15c) verändert wird (143b), wobei der zweite Teil (15c") nicht deckungsgleich mit dem ersten Teil (15c') ist.

8. Verfahren (100) nach einem der Ansprüche 1 bis 7, wobei ein KNN (1) gewählt wird (105), das Eingaben (11) zunächst mit mehreren Faltungsschichten (13a, 12a-12c) verarbeitet und aus dem hierbei erhaltenen Ergebnis mit mindestens einer weiteren Schicht (13b) mindestens einen Klassifikations-Score (2a) in Bezug auf eine vorgegebene Klassifikation (2) als Ausgabe (15) ermittelt, und wobei der iterative Block (15) so festgelegt wird (111), dass er mindestens einen Teil (12a-12c) der Faltungsschichten (13a, 12a-12c) umfasst.

9. Verfahren (100) nach Anspruch 8, wobei Bilddaten oder Zeitreihendaten als Eingaben (11) des KNN (1) gewählt werden (105a).

10. Verfahren (100) nach einem der Ansprüche 1 bis 9, wobei eine CPU oder ein FPGA als Recheneinheit gewählt wird (132a, 152a) und wobei ein Registerspeicher, oder ein Cache-Speicher, als interner Speicher gewählt wird (132b, 152b).

11. Computerimplementiertes Verfahren (200) zum Trainieren eines künstlichen neuronalen Netzwerks, KNN (1), für den Betrieb nach dem Verfahren (100) gemäß einem der Ansprüche 1 bis 8, mit den Schritten:

• es werden Lern-Eingaben (11a) sowie zugehörige Lern-Ausgaben (14a), auf die das KNN (1) die Lern-Eingaben (11a) jeweils abbilden soll, bereitgestellt (210);
• die Lern-Eingaben (11a) werden von dem KNN (1) auf Ausgaben (14) abgebildet (220);
• die Abweichung der Ausgaben (14) von den Lern-Ausgaben (14a) wird mit einer vorgegebenen Kostenfunktion (16) bewertet (230);

• die Parameter (15c), die das Verhalten der Schichten (12a-12c, 13a) im iterativen Block (15) charakterisieren, einschließlich ihrer Änderungen beim Wechsel zwischen den Iterationen, oder Parameter (17b), die das Verhalten des Hilfs-KNN (17) charakterisieren, werden dahingehend optimiert (240), dass sich bei weiterer Verarbeitung von Lern-Eingaben (11a) durch das KNN (1) die Bewertung (16a) durch die Kostenfunktion (16) voraussichtlich verbessert.

12. Verfahren (200) nach Anspruch 11, wobei die Kostenfunktion (16) einen Beitrag enthält (231), der von der Anzahl der beim Wechsel zwischen Iterationen geänderten Parameter (15c), von der Änderungsrate dieser geänderten Parameter (15c), oder von der absoluten oder relativen Änderung über alle Parameter (15c), abhängt.

13. Verfahren (200) nach einem der Ansprüche 11 bis 12, wobei gleichzeitig oder im Wechsel mit den Parametern (15c), die das Verhalten der Schichten (12a-12c, 13a) im iterativen Block (15) charakterisieren, auch weitere Parameter (1c), die das Verhalten weiterer Neuronen oder anderer Verarbeitungseinheiten des KNN (1) außerhalb des iterativen Blocks (15) charakterisieren, auf eine voraussichtlich bessere Bewertung (16a) durch die Kostenfunktion (16) optimiert werden (250).

14. Steuergerät (51) für ein Fahrzeug (50), umfassend eine Eingabeschnittstelle (51a), die mit einem oder mehreren Sensoren (52) des Fahrzeugs (50) verbindbar ist, eine Ausgabeschnittstelle (51b), die mit einem oder mehreren Aktoren (53) des Fahrzeugs (50) verbindbar ist, sowie ein künstliches neuronales Netzwerk, KNN (1), wobei dieses KNN (1) an der Verarbeitung von über die Eingabeschnittstelle (51a) bezogenen Messdaten (52a) von dem oder den Sensoren (52) zu einem Ansteuersignal (53a) für die Ausgabeschnittstelle (51b) beteiligt und für die Durchführung des Verfahrens (100) nach einem der Ansprüche 1 bis 13 hergerichtet ist.

15. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 13 auszuführen.

16. Maschinenlesbarer Datenträger oder Downloadprodukt mit dem Computerprogramm nach Anspruch 15.

17. Computer, ausgerüstet mit dem Computerprogramm nach Anspruch 15, und/oder mit dem maschinenlesbaren Datenträger oder Downloadprodukt nach Anspruch 16.

**Claims**

1. Computer-implemented method (100) for operating an artificial neural network, ANN (1), which processes inputs (11) in a sequence of layers (12a-12c, 13a-13b) to form outputs (14), the method comprising the following steps:

   • within the ANN (1), at least one iterative block (15) composed of one or more layers (12a-12c) is defined (110), which is to be executed a number of times;
   • a number J of iterations is defined (120) which is a maximum number of times this iterative block (15) is intended to be executed;
   • an input (15a) of the iterative block (15) is mapped (130) onto an output (15b) by the iterative block (15);
   • this output (15b) is fed (150) to the iterative block (15) again as input (15a) and is in turn mapped onto a new output (15b) by the iterative block (15);
   • after the iterations of the iterative block (15) have been completed (160), the output (15b) supplied by the iterative block (15) is fed (170) as input to the layer (13b) of the ANN (1) following the iterative block (15) or is provided as output (14) of the ANN (1),
   • wherein parameters (15c) that characterize the behaviour of the layers (12a-12c) in the iterative block (15) are defined or modulated (140) on the basis of the output (17a) of an auxiliary ANN (17), which receives the following as inputs:

      ○ an input (15a) of the iterative block (15), or
      ○ a processing product (13c) formed in a layer (13b) of the ANN (1) downstream of the iterative block (15), or
      ○ the parameters (15c) that characterize the behaviour of the iterative block (15), or
      ○ a continuous index (15d) of the iteration currently being executed by the iterative block (15),

   and
   • wherein at least the iterative block (15) of the ANN (1) is executed (132, 152) on at least one computing unit using machine instructions that exclusively access an internal memory of this computing unit.

2. Method (100) according to Claim 1, wherein new values of the parameters (15c), and/or updates for these parameters (15c), are defined (141) with the aid of a differentiable function of the output (17a) of the auxiliary ANN (17).

3. Method (100) according to either of Claims 1 and 2, wherein at least one parameter (15c) is modulated (142) by executing a machine instruction that is executable on the hardware platform used for this purpose more rapidly than the setting of this parameter (15c) to an arbitrary value.

4. Method (100) according to Claim 3, wherein the at least one parameter (15c) is modulated (142a) by incrementing, decrementing or bitwise shift.

5. Method (100) according to any of Claims 1 to 4, wherein only a portion (15c') of the parameters (15c) that characterize the behaviour of the layers (12a-12c) in the iterative block (15) is changed (143) upon the switching between the iterations for which the iterative block (15) is executed.

6. Method (1) according to Claim 5, wherein starting from at least one iteration, a proportion (15c') of between 1% and 20%, preferably between 1% and 15%, of the parameters (15c) that characterize the behaviour of the layers (12a-12c) in the iterative block (15) are changed (143a) upon the switching to the next iteration.

7. Method (100) according to either of Claims 5 and 6, wherein the method comprises changing (143b) a first portion (15c') of the parameters (15c) upon a first switching between iterations and a second portion (15c") of the parameters (15c) upon a second switching between iterations, wherein the second portion (15c") is not congruent with the first portion (15c').

8. Method (100) according to any of Claims 1 to 7, wherein an ANN (1) is selected (105) which firstly processes inputs (11) using a plurality of convolutional layers (13a, 12a-12c) and, from the result obtained in the process, using at least one further layer (13b), determines at least one classification score (2a) in relation to a predefined classification (2) as output (15), and wherein the iterative block (15) is defined (111) such that it comprises at least one portion (12a-12c) of the convolutional layers (13a, 12a-12c).

9. Method (100) according to Claim 8, wherein image data or time series data are selected (105a) as inputs (11) of the ANN (1).

10. Method (100) according to any of Claims 1 to 9, wherein a CPU or an FPGA is selected (132a, 152a) as a computing unit, and wherein a register memory, or a cache memory, is selected (132b, 152b) as an internal memory.

11. Computer-implemented method (200) for training an artificial neural network, ANN (1), for operation according to the method (100) according to any of Claims 1 to 8, comprising the following steps:

   • learning inputs (11a) and associated learning outputs (14a) onto which the ANN (1) is intended to map the respective learning inputs (11a) are provided (210);
   • the learning inputs (11a) are mapped (220) onto outputs (14) by the ANN (1);
   • the deviation of the outputs (14) from the learning outputs (14a) is assessed (230) using a predefined loss function (16);
   • the parameters (15c) that characterize the behaviour of the layers (12a-12c, 13a) in the iterative block (15), including their changes upon the switching between the iterations, or parameters (17b) that characterize the behaviour of the auxiliary ANN (17), are optimized (240) to the effect that upon further processing of learning inputs (11a) by the ANN (1), the assessment (16a) by the loss function (16) is expected to improve.

12. Method (200) according to Claim 11, wherein the loss function (16) contains (231) a contribution that depends on the number of parameters (15c) changed upon the switching between iterations, on the rate of change of these changed parameters (15c), or on the absolute or relative change over all parameters (15c).

13. Method (200) according to either of Claims 11 and 12, wherein simultaneously or alternately with the parameters (15c) that characterize the behaviour of the layers (12a-12c, 13a) in the iterative block (15), further parameters (1c) that characterize the behaviour of further neurons or other processing units of the ANN (1) outside the iterative block (15) are also optimized (250) to an assessment (16a) by the loss function (16) that is expected to be better.

14. Control unit (51) for a vehicle (50), comprising an input interface (51a), which is connectable to one or more sensors (52) of the vehicle (50), an output interface (51b), which is connectable to one or more actuators (53) of the vehicle (50), and an artificial neural network, ANN (1), wherein this ANN (1) participates in the processing of measurement data (52a) obtained via the input interface (51a) from the sensor(s) (52) to form a control signal (53a) for the output interface (51b) and is prepared for carrying out the method (100) according to any of Claims 1 to 13.

15. Computer program containing machine-readable instructions that, when they are executed on one or more computers, cause the one or more computers to carry out a method (100, 200) according to any of Claims 1 to 13.

16. Machine-readable data carrier or download product comprising the computer program according to Claim 15.

17. Computer equipped with the computer program according to Claim 15, and/or with the machine-readable data carrier or download product according to Claim 16.

**Revendications**

1. Procédé mis en œuvre par ordinateur (100) permettant de faire fonctionner un réseau neuronal artificiel, KNN (1), qui traite des entrées (11) dans une séquence de couches (12a-12c, 13a-13b) en sorties (14), comprenant les étapes suivantes :

   • à l'intérieur du KNN (1), au moins un bloc itératif (15) d'une ou de plusieurs couches (12a-12c), qui est à exécuter plusieurs fois, est défini (110) ;
   • un nombre J d'itérations pendant lesquelles ce bloc itératif (15) est à exécuter au maximum, est défini (120) ;
   • une entrée (15a) du bloc itératif (15) est mappée (130) du bloc itératif (15) sur une sortie (15b) ;
   • cette sortie (15b) est à nouveau amenée (150) au bloc itératif (15) sous forme d'entrée (15a) et est à son tour mappée par le bloc itératif (15) sur une nouvelle sortie (15b) ;
   • une fois les itérations du bloc itératif (15) terminées (160), la sortie (15b) fournie par le bloc itératif (15) est amenée à la couche (13b) suivant le bloc itératif (15) du KNN (1) sous forme d'entrée (170) ou est fournie sous forme de sortie (14) du KNN (1),
   • dans lequel des paramètres (15c) qui caractérisent le comportement des couches (12a-12c) dans le bloc itératif (15) sont définis ou modulés (140) à l'aide de la sortie (17a) d'un KNN auxiliaire (17) qui reçoit

      ◦ une entrée (15a) du bloc itératif (15), ou
      ◦ un produit de traitement (13c) formé dans une couche (13b) du KNN (1), placée en aval du bloc itératif (15), ou
      ◦ les paramètres (15c) qui caractérisent le comportement du bloc itératif (15), ou
      ◦ un indice continu (15d) de l'itération actuellement exécutée par le bloc itératif (15)

   sous forme d'entrée, et
   • dans lequel au moins le bloc itératif (15) du KNN (1) est exécuté (132, 152) sur au moins une unité de calcul en utilisant des commandes machine qui accèdent exclusivement à une mémoire interne de cette unité de calcul.

2. Procédé (100) selon la revendication 1, dans lequel de nouvelles valeurs des paramètres (15c) et/ou des mises à jour pour ces paramètres (15c) sont définies (141) à l'aide d'une fonction différentiable de la sortie (17a) du KNN auxiliaire (17).

3. Procédé (100) selon l'une quelconque des revendications 1 à 2, dans lequel au moins un paramètre (15c) est modulé (142) par l'exécution d'une commande machine qui est exécutable plus rapidement sur la plate-forme matérielle utilisée à cet effet que l'initialisation de ce paramètre (15c) sur une valeur quelconque.

4. Procédé (100) selon la revendication 3, dans lequel ledit au moins un paramètre (15c) est modulé (142a) par incrémentation, décrémentation ou décalage par bit.

5. Procédé (100) selon l'une quelconque des revendications 1 à 4, dans lequel seule une partie (15c') des paramètres (15c) qui caractérisent le comportement des couches (12a-12c) dans le bloc itératif (15) est modifiée (143) lors du passage entre les itérations pour lesquelles le bloc itératif (15) est exécuté.

6. Procédé (1) selon la revendication 5, dans lequel, en partant d'au moins une itération, un pourcentage (15c') compris entre 1 % et 20 %, de préférence entre 1 % et 15 %, des paramètres (15c) qui caractérisent le comportement des couches (12a-12c) dans le bloc itératif (15) est modifié (143a) lors du passage à l'itération suivante.

7. Procédé (100) selon l'une quelconque des revendications 5 à 6, dans lequel lors d'un premier passage entre les itérations, une première partie (15c') des paramètres (15c), et lors d'un deuxième passage entre les itérations, une deuxième partie (15c") des paramètres (15c) sont modifiées (143b), la deuxième partie (15c") ne coïncidant pas avec la première partie (15c').

8. Procédé (100) selon l'une quelconque des revendications 1 à 7, dans lequel un KNN (1) est sélectionné (105) qui traite des entrées (11) d'abord avec plusieurs couches de convolution (13a, 12a-12c) et détermine en tant que sortie (15) à partir du résultat obtenu à cette occasion avec au moins une couche supplémentaire (13b) au moins un score de classification (2a) en se référant à une classification prédéfinie (2), et dans lequel le bloc itératif (15) est défini (111) de telle sorte qu'il comprend au moins une partie (12a-12c) des couches de convolution (13a, 12a-12c).

9. Procédé (100) selon la revendication 8, dans lequel des données d'image ou des données de série chronologique sont sélectionnées (105a) en tant qu'entrées (11) du KNN (1).

10. Procédé (100) selon l'une quelconque des revendications 1 à 9, dans lequel une CPU ou un FPGA est choisi(e) (132a, 152a) comme unité de calcul, et dans lequel une mémoire de registre ou une mémoire cache est choisie (132b, 152b) comme mémoire interne.

11. Procédé mis en œuvre par ordinateur (200) permettant d'entraîner un réseau neuronal artificiel, KNN (1), pour le fonctionnement selon le procédé (100) selon l'une quelconque des revendications 1 à 8, comprenant les étapes suivantes :

    • des entrées d'apprentissage (11a) ainsi que des sorties d'apprentissage associées (14a) sur lesquelles le KNN (1) doit respectivement mapper les entrées d'apprentissage (11a) sont fournies (210) ;
    • les entrées d'apprentissage (11a) sont mappées (220) par le KNN (1) sur les sorties (14) ;
    • l'écart des sorties (14) par rapports aux sorties d'apprentissage (14a) est évalué (230) par une fonction de coût prédéfinie (16) ;
    • les paramètres (15c) qui caractérisent le comportement des couches (12a-12c, 13a) dans le bloc itératif (15), y compris leurs modifications lors du passage entre les itérations, ou les paramètres (17b) qui caractérisent le comportement du KNN auxiliaire (17) sont optimisés (240) en ce sens que lors d'un traitement supplémentaire des entrées d'apprentissage (11a) par le KNN (1), l'évaluation (16a) sera probablement améliorée par la fonction de coût (16).

12. Procédé (200) selon la revendication 11, dans lequel la fonction de coût (16) comporte (231) un montant qui dépend du nombre des paramètres (15c) modifiés lors du passage entre les itérations, du taux de modification de ces paramètres modifiés (15c) ou de la modification absolue ou relative pour tous les paramètres (15c).

13. Procédé (200) selon l'une quelconque des revendications 11 à 12, dans lequel en même temps ou en alternance avec les paramètres (15c) qui caractérisent le comportement des couches (12a-12c, 13a) dans le bloc itératif (15), également d'autres paramètres (1c) qui caractérisent le comportement d'autres neurones ou d'autres unités de traitement du KNN (1) en dehors du bloc itératif (15) sont optimisés (250) par la fonction de coût (16) en vue d'une évaluation (16a) probablement meilleure.

14. Appareil de commande (51) pour un véhicule (50), comprenant une interface d'entrée (51a) qui peut être reliée à un ou plusieurs capteurs (52) du véhicule (50), une interface de sortie (51b) qui peut être reliée à un ou plusieurs actionneurs (53) du véhicule (50) ainsi qu'un réseau neuronal artificiel, KNN (1), dans lequel ce KNN (1) participe au traitement de données de mesure (52a) reçues par l'interface d'entrée (51a) en provenance du ou des capteurs (52) en un signal de pilotage (53a) pour l'interface de sortie (51b) et est conçu pour l'exécution du procédé (100) selon l'une quelconque des revendications 1 à 13.

15. Programme informatique comprenant des instructions lisibles par une machine qui, lorsqu'elles sont exécutées sur un ou plusieurs ordinateurs, amènent le ou les ordinateurs à exécuter un procédé (100, 200) selon l'une des revendications 1 à 13.

16. Support de données lisible par machine ou produit à télécharger comprenant le programme informatique selon la revendication 15.

17. Ordinateur équipé du programme informatique selon la revendication 15, et/ou du support de données lisible par machine ou du produit à télécharger selon la revendication 16.

Fig. 1

Fig. 2

**Fig. 3**

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Dynamic Reconfiguration of CNNs for Input-Dependent Approximation. **M. HEMMAT et al.** 20th International Symposium on Quality Electronic Design (ISQED). IEEE, 06 March 2019, 176-182

- **T. PFEIL**. ItNet: iterative neural networks with small graphs for accurate and efficient anytime prediction. *arXiv: 2101.08685v2*